# EUROPEAN PATENT SPECIFICATION

(11) **EP 3 966 548 B1**
(45) Date of publication and mention of the grant of the patent: **02.08.2023**
(21) Application number: 20735023.2
(22) Date of filing: 08.05.2020
(51) Int. Cl.: G01N 11/12

(54) **WAX TESTER**
WACHSTESTVORRICHTUNG
TESTEUR DE CIRE

(30) Priority: 09.05.2019 PL 42987719
(43) Date of publication of application: 16.03.2022
(73) Proprietor: Uniwersytet Marii Curie-Sklodowskiej, 20-031 Lublin (PL)
(72) Inventor: PIETROW, Marek, 20-330 Lublin (PL); GAGOS, Mariusz, 20-530 Lublin (PL); WAWRYSZCZUK, Jan, 20-032 Lublin (PL)
(74) Representative: Augustyniak, Magdalena Anna
(86) International application number: PCT/IB2020/054371
(87) International publication number: WO 2020/225785

(56) References cited:
- SU-A1- 1 784 864
- US-A- 2 535 830
- K. K. CHEE ET AL: "A study of low shear viscosity of polymer melts", CANADIAN JOURNAL OF CHEMICAL ENGINEERING, vol. 48, no. 4, 1 August 1970 (1970-08-01) , pages 362-372, XP055718894, US ISSN: 0008-4034, DOI: 10.1002/cjce.5450480404

## Description

The invention relates to a tester of beeswax, cosmetic waxes or waxes used in pharmaceutical formulations and articles like all kinds of candles or grave lanterns, designed to discern between the natural wax and waxes modified by substances altering properties thereof, easy to operate, portable, able to be commonly used in case of need.

In consideration of growing prices of the natural beeswax, one of the numerous problems of the modern bee-keeping is modifying such a wax with additives. A modified wax, in particular used by beekeepers for a low-quality foundation, produces an effect of deteriorating condition of bee families, and also reducing quality of other products made of it.

Among known and widely applied methods of assessing wax quality an organoleptic method is used, which, unfortunately, identifies its adulterations unsatisfactorily. Other methods, which enable unequivocal detection of adulteration of wax, is e.g. gas chromatography coupled with mass spectrometry (GCMS), FTIR spectroscopy, scanning calorimetry (DSC), or X-ray diffraction, however, such analyses are carried out in laboratories on a specialized equipment, restricting their availability to foundation makers and beekeepers.

There are a number of technical solutions that allow to test samples properties based on the penetration of the blade into the sample under the influence of a controlled pressure force, the temperature of which can be simultaneously controlled. The features of the devices are directed to the properties of the materials tested mainly resins and thermoplastic polymers.

Document US2535830 A discloses the apparatus intended for testing the thermo-setting materials such as resins that comprises a base for supporting a sample an arm spaced above the base, and indicator on the arm, a vertically slidable plunger carried by the connecting the plunger with the indicator, a needle depending from the plunger for pressure contact with the sample, and a heater for holding the needle at a substantially even degree of heat. The device measures the extent to which the needle will penetrate a sample, whereas the electric heater heat not only the needle but also the weigh element to which the needle is attached.

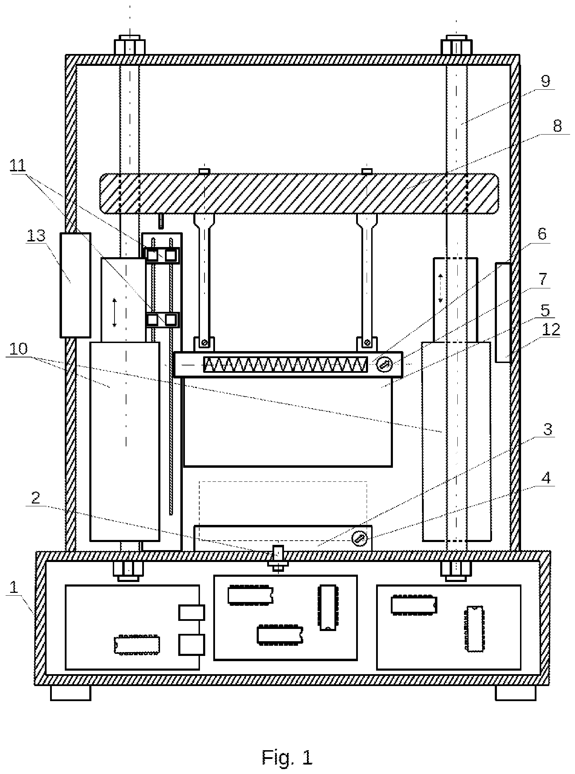

Document SU 1 784 864 A1 (figure 1) discloses the apparatus intended for testing thermoplastic materials, having a base with the fastening device for a model sample, the loader of the calibrated power load on the road, the rod heated by the electric current, the speed matter of the displacement of a rod, electric current source, a gouge of the electric current passing through the rod, and variable resistor for regulating the force of the electric current passing through the rod. The device assumes the movement of a rod penetrating the sample with uniform speed, which entails the need to heat it to a temperature above the melting point of the tested material. The pressure on the sample is achieved by applying the restoring force.

Document K.K. CHEE ET Al: "A study of low shear viscosity of polymer melts", CANADIAN JOURNAL OF CHEMICAL ENGINEERING vol. 48, no. 4, 1 August 1970 (1970-08-01), pages 362-372 (figure 1) discloses coaxial cylinder viscometer for testing polymers in a fluid state where the temperature of the sample is stabilized to the temperature of the device and the needle. The object of the invention was to provide a portable device, easy to operate and able to be commonly used in case of need, serving to discern between the natural wax and a wax doped with substances which reduce its quality, by measuring physical properties discriminating them.

A wax tester according to the invention is defined in claim 1 and is constructed of a base, with a display fixed on its front panel and an internal chamber, where a power unit with the microcontroller is provided to control operation of the device, to record a measurement result and send it to the display. At the upper surface of the base a holder is provided for a tested wax sample with a temperature sensor, and above it, vertically in the middle, a transverse guide is mounted with the sample-penetrating element mounted below it along with a heater and temperature sensor graduated in the range of wax softening. Tips of guide's arms are loosely mounted on two vertical rods, where two micro actuators are also installed to control sliding guide movement up to the home position, after passing the penetrating element through the wax. On the base, in addition, a panel is mounted with two optocouplers for determining the time of sample penetration, and the whole is enclosed in a casing with an opening window at the front panel, to provide access to the holder provided for placing a sample.

It is preferred that the element penetrating the wax sample is in a form of a horizontally mounted heated rod, tube, plane such as, e.g. a knife or a vertical needle or a rod with a sharpened tip.

It is also preferred that holder for placing a sample is located on a rotatable axis mounted on the base, which enable cutting the same sample in various places for a more detailed analysis thereof.

It is preferred that the casing is provided with open-work walls with a fan and a Peltier module with a heater, controlled by the microcontroller for faster cooling-down the interior of the analyzer to a programmed temperature of a subsequent consecutive measurement.

An electronic circuit in a form of the properly programmed microcontroller controls advancement and retraction of the microactuators, to enable gravitational descent of the guide along with the wax penetrating element, followed by lifting it up and holding in a home position for a subsequent measurement.

Additionally, by the use of a temperature sensor, the system controls the temperature of the entire device, to bring it to the initial temperature before the start of the each subsequent measurement, and also controls the temperature and pressure force of the element penetrating the sample and time of its passage through the wax, depending on the kind and content of sample modifying components. Signals from the optocouplers determine the moment when the element penetrating the sample reaches the starting and final positions in a sample. These measurements are passed to the microcontroller, differentiated and compared to the penetration time range adopted for the standard e.g. the natural wax, and then displayed on an LCD screen, in the form of two numerical values, one - the penetration time of the element through a tested sample and the other - the percent value expressing a difference from the analogous time for the standard wax, which illustrates presence of modifying substances.

Pure natural waxes of various origin are characterized by approximate physical features such as an elasticity or viscosity at the given temperature conditions, a melting point, and also a heat conduction, consequently exhibiting approximate average penetration rates. Different shorter times, even by several hundred %, are exhibited by the doped waxes.

The invention is disclosed in the following embodiment and on the drawing, wherein fig. 1 visualizes a structure of the wax tester in a cross-sectional view.

The wax tester according to the invention is constructed of a base 1, with a display fixed on its front panel in a form of an LCD screen, and an internal chamber, where a power unit with the microcontroller is provided. To control the mechanical part of the device, properly programmed Arduino Mega 2560 microcontroller was used, and controlled, stabilized DC power units were used for supplying power to the heater and actuators. At the upper surface of the base a holder 3 is provided on a rotatable axis 2 for a tested wax sample, with a temperature sensor 4, and above it vertically in the middle, a transverse guide 8 is mounted with an element 5 mounted below it in a form of a copper knife along with a heater 6 and temperature sensor 7. Loosely mounted tips of guide's arms are sliding along two vertical rods 9, where two micro actuators 10 are installed. On the base, in addition, a panel is mounted with two optocouplers 11, and the whole is enclosed in a casing with a shutting window at the front panel, to provide access to the holder provided for placing a sample. The whole is enclosed in a casing, and a fan 12 and a Peltier module with a heater 13, controlled by the microcontroller is mounted on the internal walls thereof, and an opening window is located at the front panel to provide access to the holder provided for placing a sample.

## Claims

1. A wax tester constructed of a base with a display fixed on its front panel and an internal chamber, where a power unit with the microcontroller is provided to control operation of the device, wherein at the upper surface of the base (1) a holder (3) is provided for the tested wax sample with a temperature sensor (4), and above it vertically in the middle a transverse guide (8) is mounted with an element (5) mounted below it for penetrating a sample, along with a heater (6) and temperature sensor (7), wherein tips of guide's arms are mounted on two vertical rods (9) where two micro actuators are also installed (10) to enable upward movement of the guide to a home position after passing the penetrating element through the wax, and on the base, in addition, a panel is mounted with two optocouplers (11) for determining the time of sample penetration, and the whole is enclosed in a casing with a shutting window at the front panel, to provide access to the holder designed for inserting the sample.

2. The tester according to claim 1, **characterized in that** the element (5) penetrating the sample is in a form of a heated rod, tube or plane e.g. a knife, or a vertical needle or a rod with a sharpened tip, and is made of a material with good heat conduction.

3. The tester according to claim 1, **characterized in that** the holder (3) for placing a sample is located on a rotatable axis (2) mounted on the base, which enables a change the sample position and cutting it in various places for a more detailed analysis thereof.

4. The tester according to claim 1, **characterized in that** the casing is provided with open-work walls with a fan (12) and a Peltier module with a heater (13), controlled by the microcontroller.

## Patentansprüche

1. Wachsanalysator, aufgebaut aus einer Basis mit einer an ihrer Frontplatte befestigten Anzeige und einer inneren Kammer, in der eine Stromversorgungseinheit mit einem Mikrocontroller zur Steuerung des Betriebs des Geräts vorgesehen ist, wobei an der oberen Oberfläche der Basis (1) ein Halter (3) für die zu prüfende Wachsprobe mit einem Temperaturfühler (4) vorgesehen ist, und darüber vertikal in der Mitte eine Querführung (8) mit einem darunter angebrachten Element (5) zum Durchdringen einer Probe und mit einer Heizung (6) und einen Temperatursensor (7) angebracht ist, wobei die Spitzen der Führungsarme auf zwei vertikalen Stangen (9) montiert sind, wo auch zwei Mikroaktuatoren installiert sind (10), um eine Aufwärtsbewegung der Führung in eine Ausgangsposition nach Passieren des durch das Wachs durchdringenden Element zu ermöglichen, und auf der Basis zusätzlich eine Platte mit zwei Optokopplern (11) zur Bestimmung der Probendurchdringungszeit angebracht ist, und das Ganze in einem Gehäuse mit einem abschließbaren Fenster in der Frontplatte eingeschlossen ist, um Zugang zum Halter mit der Probe zu ermöglichen.

2. Analysator nach Anspruch 1, **dadurch gekennzeichnet, dass** das die Probe durchdringende Element (5), die Form eines beheizten Stabs, Rohrs oder einer beheizten Ebene, z.B. eines Messers, einer senkrechten Nadel oder eines Stabs mit scharfer Spitze hat, und aus einem gut wärmeleitenden Material hergestellt ist.

3. Analysator nach Anspruch 1, **dadurch gekennzeichnet, dass** sich der Halter (3) zum Auflegen einer Probe auf einer auf der Basis (2) gelagerten Rundachse angeordnet ist, was eine Änderung der Probenposition und ein Schneiden an verschiedenen Stellen zur detaillierten Analyse davon ermöglicht.

4. Analysator nach Anspruch 1, **dadurch gekennzeichnet, dass** das Gehäuse mit durchbrochenen Wänden mit einem Ventilator (12) und einem Peltier-Modul mit einer Heizung (13) versehen ist, gesteuert durch einen Mikrocontroller.

## Revendications

1. Un analyseur de cire construit a partir d'une base, avec un afficheur fixé sur son panneau avant et une chambre interne, où une unité d'alimentation avec un microcontrôleur est pourvue pour contrôler le fonctionnement de l'appareil, dans lequel à la surface supérieure de la base (1) un support (3) est pourvue pour l'échantillon de cire testée avec un capteur de température (4), et au-dessus de la base, verticalement au milieu, un guide transversal (8) est installé, avec un élément (5) monté en dessous qui pénètre dans l'échantillon, avec un élément chauffant (6) et un capteur de température (7), dans lequel les pointes des bras du guide sont montées sur deux tiges verticales (9) où deux microactionneurs sont également installés (10) pour permettre le mouvement ascendant du guide vers une position de repos après l'élément pénétrant a passé à travers la cire, et sur la base, en outre, un panneau est monté avec deux optocoupleurs (11) pour déterminer le temps de pénétration de l'échantillon, et le tout est enfermé dans un boîtier avec une fenêtre de fermeture sur le panneau avant, pour permettre l'accès au support conçu pour insérer l'échantillon.

2. Analyseur selon la revendication 1, **caractérisé en ce que** l'élément (5) qui pénètre dans l'échantillon est sous la forme d'une tige, d'un tube ou d'un plan chauffé, par exemple un couteau, ou une aiguille verticale ou une tige avec une pointe aiguisée, et est faite en matériau à bonne conductivité thermique.

3. Analyseur selon la revendication 1, **caractérisé en ce que** le support (3) pour placer l'échantillon est situé sur un axe rotatif (2) monté sur la base, ce qui permet de modifier la position de l'échantillon et de le couper en divers endroits pour une analyse plus détaillée de celle-ci.

4. Analyseur selon la revendication 1, **caractérisé en ce que** le boîtier est muni de parois ajourées avec un ventilateur (12) et un module Peltier avec un réchauffeur (13), contrôlé par le microcontrôleur.
